# EUROPEAN PATENT SPECIFICATION

(11) **EP 4 257 763 B1**
(45) Date of publication and mention of the grant of the patent: **12.06.2024**
(21) Application number: 23192788.0
(22) Date of filing: 26.06.2018
(51) Int. Cl.: E03C 1/046, E03D 9/02

(54) **ADDITIVE DISPENSER**
ADDITIVSPENDER
DISTRIBUTEUR D'ADDITIF

(30) Priority: 27.06.2017 GB 201710233
(43) Date of publication of application: 11.10.2023
(62) Divisional of application: 18739581.9
(73) Proprietor: Kohler Mira Limited, Birmingham West Midlands GL52 5EP (GB)
(72) Inventor: THOMPSON, Ian, Dunfermline KY12 7XN (GB)
(74) Representative: Barker Brettell LLP

(56) References cited:
- US-A- 2 564 618
- US-A- 3 890 657
- US-A- 4 971 105
- US-A- 5 004 158

## Description

This invention relates to a dosing apparatus for dispensing a set volume of a nongaseous fluid at a set rate. The invention may have particular application for sanitary applications, such as adding an essential oil, soap, shower gel or the likes to a water stream in a shower, tap or toilet, to absorbent scent pads, hand towels, or the likes, but it need not be limited to these uses. The invention also relates to an adapter arranged to be removably attachable to both the dosing apparatus, of which it may form a part, and a standard essential oil bottle, and to fluidly connect the essential oil bottle to the dosing apparatus.

US 5,004,158 (A) discloses a device, intended primarily for use in a shower stall, that is adapted to dispense a predetermined total amount of a selected additive into a water stream, with the rate of mixing of the additive and water being controlled as a function of the water pressure. A positive displacement pump is used to dispense the additive from a storage chamber, and the additive is dispensed via a controllable applicator device.

US 4,971,105 (A) discloses a hydraulic fluid injection apparatus that has a container that has a chamber with a first, second and return means section. There are two pistons with a seal means on each piston and the two pistons are connected by a rod. Input fluid pressure by a pressurized first fluid, such as water, on the first piston causes the second piston to move and pressurise a second fluid, such as an insecticide, out of the second section and into a mixing line, through a calibrated metering means and into an output fluid line to be joined by the first fluid arriving from the first section of the chamber. There is a mixing means in the output fluid line to mix the two fluids more thoroughly. There is a return means in the return means section of the chamber that returns the second piston to a lower position when the pressure on the first piston is less than the return force of the return means and allows the second section to be refilled as necessary. One-way valves are supplied to allow fluid movement in only the desired direction. A stop means in the first section limits the travel of the first piston.

US 2,564,618 (A) discloses a soap dispenser arranged to be attached to a water supply and having an attachable bottle of soap and a control valve to allow mixing of the soap with water, the soap being drawn through by suction created by the water flow.

In the prior art, it is known to add bath oils, aromatherapy oils, and/or other additives to water streams, for example in showers, bidets, toilets, baths and basins. The rate at which the additive is dispensed is influenced by the flow rate of the water stream, however, which can lead to unexpected effects for a user (e.g. a pressure surge early in a shower resulting in their being no fragrance left when desired).

More precise control of the volume of additive dispensed is also desirable, so as to extend the useful life of a container of additive, and/or to achieve more consistent results.

In addition, it can be difficult to switch between additives during or between uses.

The invention disclosed herein seeks to address one or more of these issues.

The skilled person will appreciate that these issues do not relate solely to sanitary applications; for example being applicable to dispensing syrup for mixing drinks, or adding vitamins and minerals to drinks or the likes. Similarly, the apparatus disclosed herein could be used to dispense cleaning fluid to clean a toilet, sink or the likes rather than to clean or fragrance a user.

For convenience, the invention is described herein in the context of adding an essential oil (also known as an aromatherapy oil) to a liquid stream (e.g. water). According to a first aspect of the invention, there is provided a liquid dosing apparatus for dispensing a liquid from a container into a liquid stream of a shower, toilet or tap, as is described in Claim 1.

The dosing apparatus of the first aspect may additionally comprise:
an adapter arranged to engagingly receive a container of liquid and comprising a first one-way valve arranged to allow liquid flow out of the container and prevent liquid flow into the container,
and the damping control system arranged to control dispensing rate of the set volume of the liquid may comprise:
a hydraulic piston within a charging chamber containing hydraulic fluid, wherein the hydraulic piston is arranged to be driven so as to move a quantity of hydraulic fluid from the hydraulic charging chamber and through a second one-way valve and to a sprung damping chamber when the dosing mechanism is activated; and
a return channel across the second one-way valve, wherein the return channel is arranged to limit the rate at which the hydraulic fluid can pass therethrough;
wherein the sprung damping chamber is arranged to absorb the volume of the displaced hydraulic fluid while creating a spring force to complete a return cycle of the dosing mechanism, the spring force driving the hydraulic fluid in the return direction via the return channel.

The dispensing outlet may be connected to a water stream, optionally a shower, toilet or tap water stream.

In the apparatus of the invention, the damping control system may be arranged to allow and control adjustment of the dispensing rate.

Advantageously, a user can therefore adjust the rate at which/the duration of time over which the liquid is dispensed.

In such embodiments, the damping control system may be arranged such that the dispensing rate can be varied between no restriction of the return channel, and hence near-instant dispensing of the set volume on activation, and sufficient restriction to spread dispensing over a set time period.

The damping control system may comprise a flow valve arranged to provide at least a part of the return channel across the second one-way valve, and the flow valve may be arranged to adjustably limit the rate at which the hydraulic fluid can pass therethrough.

The container may be a standard aromatherapy oil bottle.

The container may have an opening through which the liquid is arranged to pass, and, in use, the container may be postioned such that the opening is the lowest part of the container. Gravity may therefore assist draining of the container's contents.

The adapter used in the dosing apparatus according to the first aspect of the invention may be part of a cartridge arranged to engagingly receive the container.

The cartridge may arranged to be removeably attached to both the container and the dosing mechanism.

In such embodiments, the adapter may be arranged to serve as a lid for the container, potentially retaining any remaining liquid within the container when the cartridge is removed from the rest of the dosing apparatus. Additionally or alternatively, the cartridge is arranged to be a press-fit with a housing of the dosing mechanism for ease of attachment and removal.

The adapter may comprise an air-replenishment valve to allow air into the container in place of the liquid extracted.

The set volume may be arranged to be adjusted by a user.

The adapter may be located above the dosing mechanism such that the liquid travels downwards from the container into the dosing chamber when activated.

The dosing mechanism may be arranged to be activated using a dose activator. The dose activator may comprise a dose button, such as a push button or a pull or twist or leverstyle button.

The dose activator may comprise a slider which is arranged to be moved downwards to move the moveable member downwards, and which is pulled back up by the dosing apparatus as the moveable member is raised during the return cycle. The dose activator or dose button may travel vertically or horizontally or at any angle therebetween. The line of movement of the dose activator may be chosen to provide ergonomic use, amongst other things. Slider position may be arranged to indicate how much of the set volume has been dispensed.

The dose activator may operate the slider directly without any intervening mechanism. Or, the dose activator may operate the slider indirectly, e.g via one or more gears or levers, perhaps a series of gears or levers.

The liquid may be an aromtherapy oil, liquid soap, fragrance, or shower gel.

In embodiments with a sprung damping chamber, the spring force of the sprung damping chamber may be provided by a biasing member comprising at least one of:
a spring; compressible foam; memory metal; an air bubble; and an elastic compressible material such as rubber.

The dispensing outlet may be adjacent to the exit point for liquid fom the dispensing chamber.

The dosing mechanism may be a dosing pump comprising a dosing piston with a barrel, the barrel forming the dosing chamber and the piston forming the moveable member. The dosing piston may be arranged to draw a set volume of the liquid into the barrel on activation, activation comprising moving the dosing piston in a first direction. The damping control system may be arranged to control a dispensing rate of the set volume of the liquid by controlling return speed of the dosing piston.

In such embodiments, the first direction may be downwards, such that the dosing piston is drawn downwards to draw the liquid into the dosing chamber, and is moved upwards by the return of the hydraulic fluid.

According to a second aspect of the invention there is provided a shower control box or tap comprising a dosing apparatus according to the first aspect of the invention.

The adapter may be releasably attachable to the dosing apparatus described above. In such embodiments, the apparatus may comprise:
a thread arranged to engagingly receive the neck of the bottle, so as to form a seal therewith;
an outlet arranged to allow a liquid within the bottle to pass therethrough; and
a one-way valve arranged to allow air into the bottle,
   wherein the one-way valve is arranged such that air can enter the bottle only when the liquid is drawn out of the bottle via the outlet, and wherein the outlet is arranged such that the liquid cannot pass through the outlet unless a force is applied to the liquid.

The outlet may comprise an elongate projection with a passageway therethrough, the elongate projection being oriented away from the bottle.

The adapter may be arranged to be a push-fit with the dosing apparatus.

The outlet and one-way valve may be arranged such that liquid is only drawn through the outlet when a pressure differential between air near the inlet of the one-way valve and the outlet exceeds a threshold.

The skilled person will appreciate that features discussed in relation to any one aspect of the invention may be provided with any other aspect of the invention.

Embodiments of the invention will now be described in more detail by way of example only with reference to the accompanying drawings in which like reference numerals are used for like features:
Figure 1 is a schematic front view of a dosing apparatus of an embodiment of the invention;

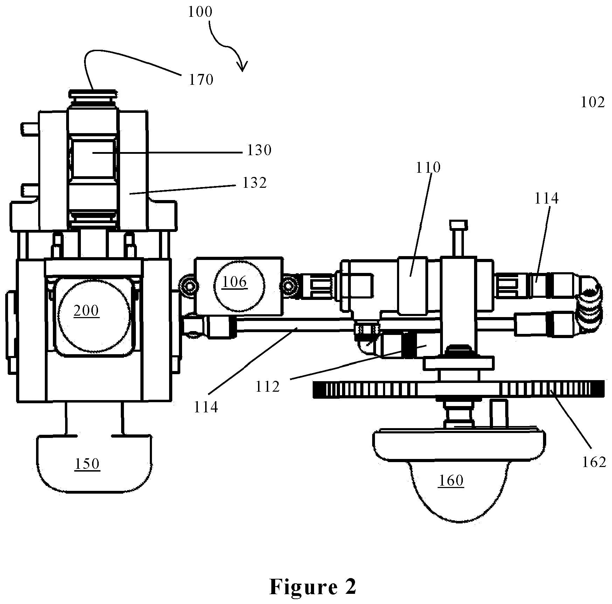

Figure 2 is a schematic top view of the dosing apparatus of Figure 1;

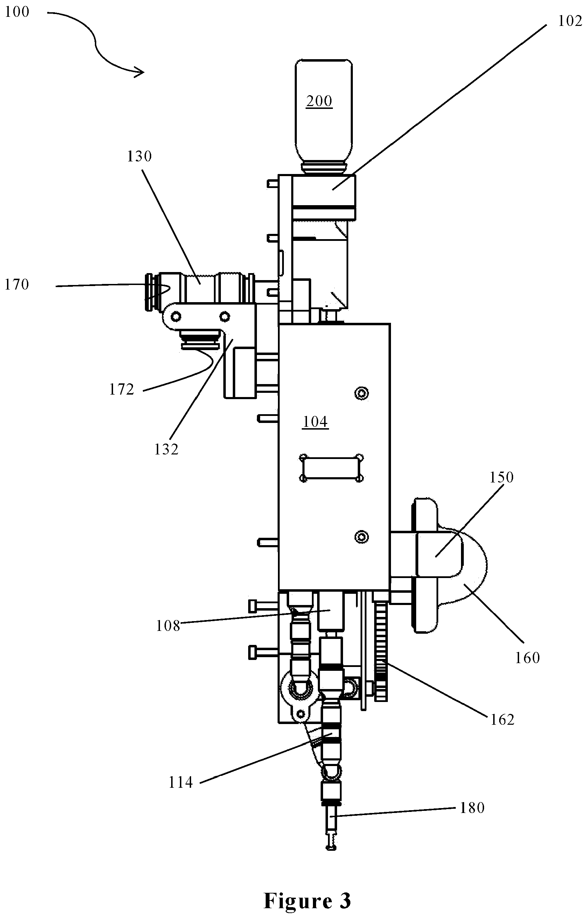

Figure 3 is a schematic side view of the dosing apparatus of Figure 1;

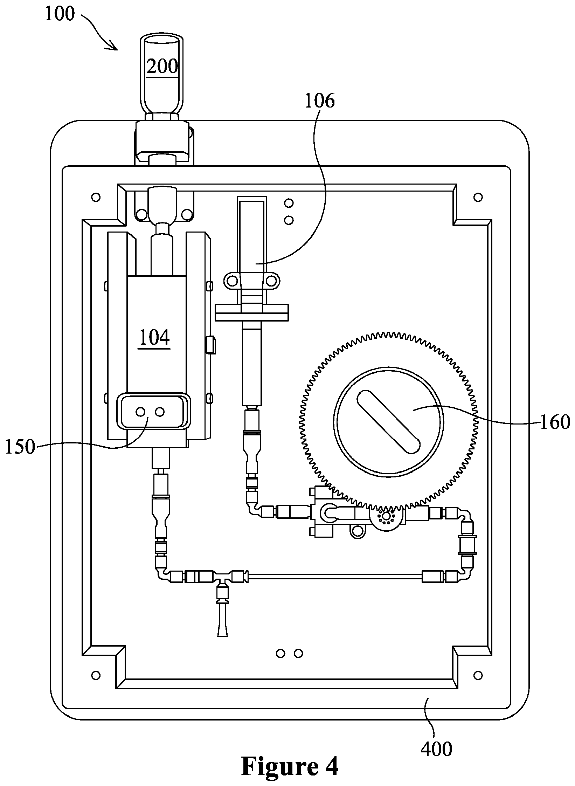

Figure 4 shows a front view of the dosing apparatus of Figure 1 within a housing, with the front of the housing removed;

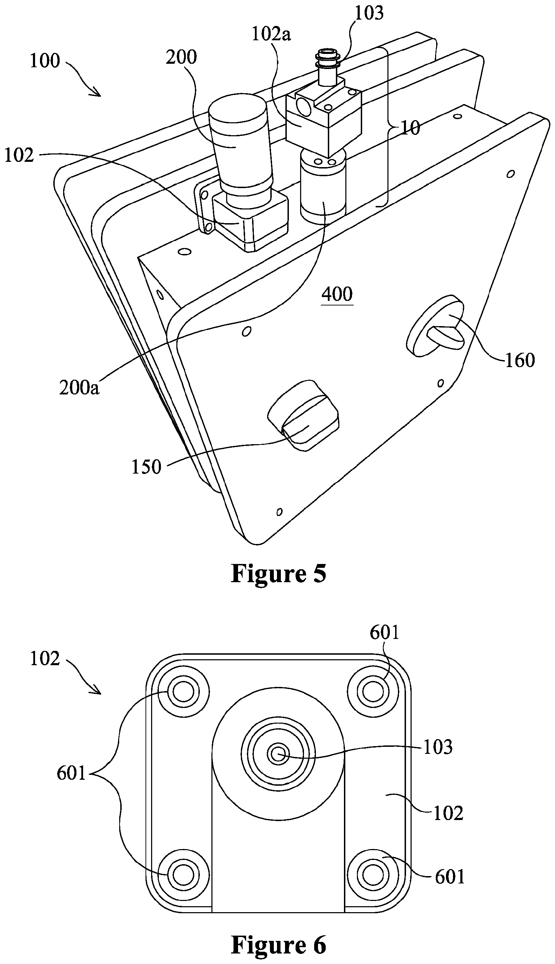

Figure 5 shows a perspective view of the dosing apparatus and housing of Figure 4, with the front of the housing in place and a spare container and adapter placed on the top of the housing;
Figure 6 shows a schematic underneath view of the container and adapter shown in the earlier Figures;

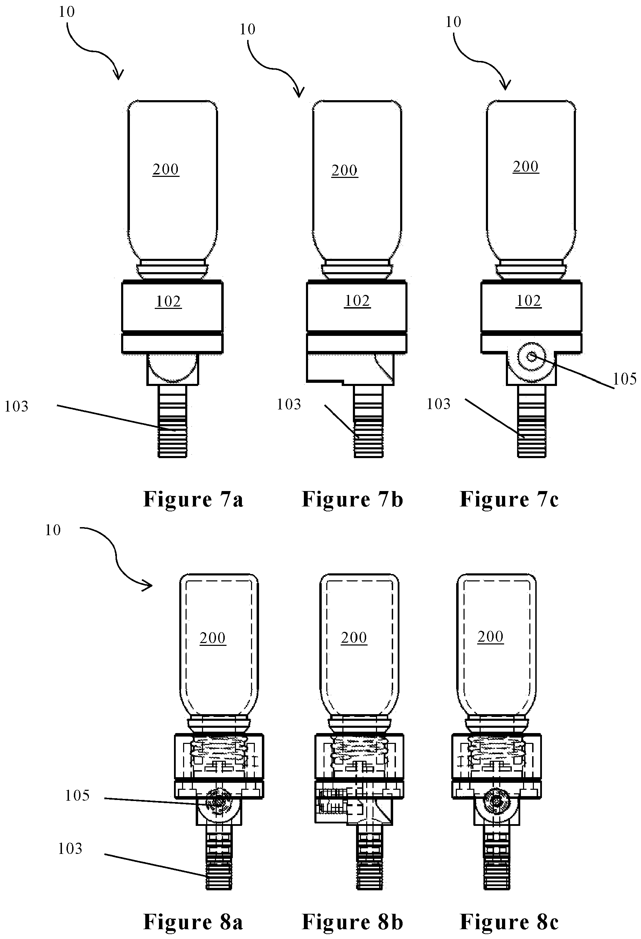

Figures 7a, 7b and 7c show schematic side views of the container and adapter shown in the earlier Figures; and
Figures 8a, 8b and 8c show equivalent side views to Figures 7a, 7b and 7c respectively, with internal detail shown in dotted lines.

In the drawings, like reference numerals are used for like components.

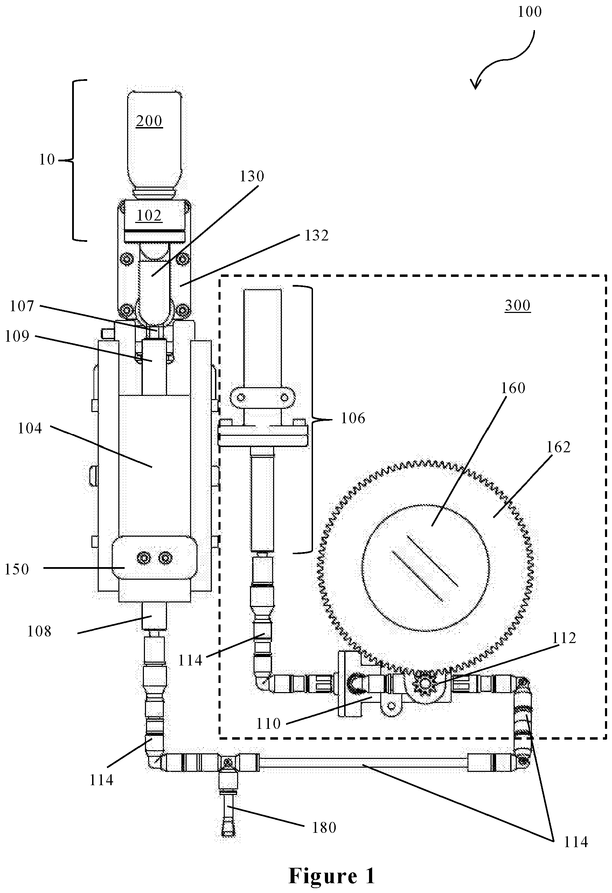

Figure 1 shows a dosing apparatus 100 with an aromatherapy oil bottle 200 mounted thereon. The liquid is therefore aromatherapy oil in the embodiment being described, although the skilled person will appreciate that any liquid or mixture of liquids, including creams and gels, may take the place of the aromatherapy oil in other embodiments.

The skilled person will appreciate that, in other embodiments, other bottles 200 or containers may be mounted, or a reservoir may be provided within the dosing apparatus 100 and an additive liquid may be poured into the reservoir, instead of mounting a separable container of the additive.

The bottle 200 is mounted with its opening downwards so that gravity can assist draining of the bottle 200. Wastage may therefore be minimal, as the liquid drains from the bottle 200 by gravity by way of the bottle 200 being turned upside down with respect to its normal position. In alternative embodiments, a bottle spring loaded (or otherwise urged using different mechanism) to provide a force on the liquid within towards the opening of the bottle could be used to allow the bottle to be loaded in the standard (upright, i.e. opening directed upwards) position whilst potentially reducing wastage as compared to suction pipe arrangements for upright bottles.

An adapter 102 is provided, the adapter 102 being arranged to receive a neck of the bottle 200. The adapter 102 has a thread sized to match the thread on the neck of the bottle 200. The adapter thread allows the bottle 200 to be securely fitted to the adapter 102 and seals it in place.

In the embodiment being described, the bottle 200 is a standard aromatherapy oil/essential oil bottle - the present standard is standard DIN168 glass bottle vials and the adapter 102 of the present invention is sized and shaped for use with these bottles 200. The skilled person will appreciate that, in alternative embodiments, adapter shape and dimensions may be adjusted to accommodate other bottle shapes and sizes.

The bottle 200 is attached to the adapter 102 by rotating the thread of the bottle 200 into the adapter 102 until it meets a sealing face within the adapter 102. The adapter 102 then seals the inside of the bottle 200 from the outside air to prevent damage to its contents - which may be oils, scents, creams, medicated preparations, health or flavouring additives for drinking water, additives into tap water to aid shaving or wellness activities (e.g. steaming with menthol) etc.

In use, the neck of the bottle 200 is screwed into the adapter 102. In alternative embodiments, the bottle 200 or other container may be a push-fit with the adapter 102, clipped, screwed or glued to the adapter 102, or connected in any other way. In other embodiments, the adapter 102 may be integral with the container 200, the adapter 102 and container 200 together forming a detachable and replaceable cartridge 10 for use with the dosing apparatus 100.

The cartridge 10 - either as a single unit or as a combination of a detachable adapter 102 and bottle 200 - provides a simple and convenient way of swapping additive liquids. A user may want multiple different additives at different stages of a shower, for example. The cartridge 10 may be easily removed and replaced, without removing the adapter 102 from the bottle 200. The adapter 102 serves as a lid for the bottle 200 when the bottle 200 is not connected to the dosing apparatus 100.

The adapter 102 comprises an outlet 103. The outlet 103 is where the additive in the bottle 200 is dispensed from. In the embodiment being described, the outlet 103 extends downwardly from and parallel to the length of the bottle. Gravity therefore assists in extracting as much of the liquid as reasonably possible from the bottle 200.

In the embodiment being described, the outlet 103 is also used to mount, orientate and seal the adapter 102 into the dosing apparatus 100. The outlet 103 comprises a hollow elongate projection, in this case a tube, arranged to fit within the apparatus 100 in the embodiment being described (in this case, within a pipe 130 of the apparatus), so as to facilitate the outlet's mounting and orientation functions.

In the embodiment being described, the outlet 103 comprises a passage with a one-way valve. The one-way valve is arranged to allow liquid within the bottle 200 to leave the bottle, and to prevent the return of liquid into the bottle. In alternative embodiments, the outlet 103 may not have a one-way valve, and may instead be an unimpeded passage. In such cases, the passage is narrow (such that the liquid does not spill) and pressures are arranged such that the liquid will not pass through the outlet 103 unless drawn through, as described below.

In the embodiment being described, the adapter 102 comprises an air replenishment valve 105. The air replenishment valve 105 allows in air to replace the volume of liquid removed from the bottle 200, so preventing vacuum effects from retaining liquid within the bottle 200. The air replenishment valve 105 does not allow the passage of liquid therethrough. The air replenishment valve 105 is a one-way valve such that air cannot leave the bottle 200 via the air replenishment valve 105.

In the embodiment being described, a channel leads from the air replenishment valve 105 to the upper surface of the adapter 102, so providing a route for air to pass into the bottle 200, separate from the outlet 103.

Conveniently, having the outlet 103 and the air-replenishment valve 105 located in an adapter 102 that is a screw-fit with the bottle 200 allows standard bottles 200 to be used without modification.

The air replenishment valve 105 is used in the adapter 102 to maintain a seal on the bottle 200 once it is fitted to the adapter 102. This valve 105 prevents the bottle's contents escaping, and also allows air into the bottle when the liquid is drawn down into the rest of the apparatus 100 for use, so as to prevent a hydraulic or vacuum lock.

In alternative or additional embodiments, a small hole in an upper surface (in the orientation shown, i.e. the far end of the bottle from its opening) of the bottle 200 may be used instead of, or as well as, an air replenishment valve 105, and/or the air replenishment valve may be located differently with respect to the adapter 102 and bottle 200. In embodiments in which a hole is provided instead of an air replenishment valve 105, a one-way valve is provided in the outlet 103.

In other embodiments, there may be no air replenishment valve, nor a hole. In such embodiments, the container 200 may or may not be compressible to reduce vacuum effects.

In the embodiment being described, the adapter 102 is connected to a housing 400 of the dosing apparatus. The adapter 102 is a push-fit with the housing 400 in this embodiment, and can be attached and detached in this way. In the embodiment being described, formations 601 on one or more surfaces of the adapter 102 are provided to releasably interlock with corresponding formations on the housing 400. In alternative or additional embodiments, other connection means may be used, or the adapter 102 may be integral with the housing 400.

In embodiments wherein the adapter 102 is detachable from the housing 400, the adapter 102 allows a user to rapidly change from one bottle 200 to another without switching the apparatus 100 off or unscrewing the bottle 200. The entire cartridge (i.e. adapter 102 and bottle 200) is exchanged with another. Once the bottle 200 fitted to the adapter 102 is exhausted, the bottle 200 can be removed from the adapter 102 and replaced or recharged.

The dosing apparatus 100 comprises a dosing pump 104. In the embodiment being described, the dosing pump 104 is located below the one-way valve 103 to facilitate drawing the liquid out of the bottle 200 and into the dosing pump 104.

The dosing pump 104 has a dosing pump housing 104 which includes a docking member 132 arranged to receive the adapter 102. In the embodiment being described, the adapter 102 is pushed into the top of the dosing pump housing 104, engaging with the docking member 132 and sealing the adapter 102 in place.

In embodiments with an in-built reservoir for the additive liquid instead of an adapter 102 for a separable container 200, the reservoir would take the place of the docking member 132.

The dosing pump 104 has a barrel 109 and a dosing piston (not shown - covered by the dosing pump housing 104). A nozzle 107 extending from the barrel 109 provides a route for liquid to enter and leave the barrel 109.

The barrel 109 forms a dosing chamber - a set volume (dose) of liquid is drawn out of the bottle 200 and into the barrel 109 when the apparatus 100 is activated.

The dosing pump 104 has a dose button 150 which can be used to activate the apparatus 100, i.e. which is a dose activator. The dose button 150 is - directly or indirectly, electrically and/or mechanically - connected to the dosing piston. A slider or other control means, including an electronic interface such as a graphical user interface, may be provided in additional or alternative embodiments.

When the dose button 150 is driven (manually or electro/mechanically driven), the connected dosing pump piston is moved away from the adapter 102, drawing a vacuum on the contents of the bottle 200. The suction/vacuum created is sufficient to open the air replenishment valve 105 in the adapter 102, allowing air to enter and the liquid in the bottle to fill the space in the dosing pump barrel 109. The suction applied therefore allows liquid to be drawn out of the bottle 200, with air passing into the bottle 200 via the air replenishment valve 105 to take its place. This can be thought of as a pressure differential between air near the inlet of the one-way valve and the outlet needing to exceed a threshold (with the pressure at the outlet being lower) for the liquid to pass through the outlet 103.

In various embodiments, the dose button 150 may be a push button, lever, rotatable knob, pull cord or other interface, including an electronic user interface, or any other suitable activation means. The skilled person will appreciate that, although the term "button" is used for clarity with reference to the drawings, any suitable interface known in the art may be used. The does button 150 may travel vertically or horizontally or at an angle with travel of movement appropriate for good ergonomic use, and that movement may be used to move the moveable member (in this case the dosing piston). In embodiments with an electronic interface, the movement (if any - there would be no movement for a graphical user interface "button") or activation of the button 150 causes an electrical signal which causes the moveable member to move, instead of moving it directly.

In the embodiment being described, the space is a set volume such that the same dose of liquid is taken in with each activation. In alternative or additional embodiments, the dose button 150 may be substituted with a different control means allowing adjustment of the set volume - the dosing pump piston can be drawn down by a differing amount so as to vary the amount of liquid taken from the bottle 200.

The liquid from the bottle 200 remains in the dosing pump barrel 109 until the pump piston is driven (upwards) delivering the liquid through a dispensing outlet 170.

In the embodiment being described, the outlet 170 is connected to a water stream for dispersion in a shower, bath or faucet outlet. In the embodiment being described, a pipe 130 provides a T-junction - the water stream enters through one opening 172 and leaves through a second opening 170, carrying with it the additive. The third branch of the T-junction is in fluid communication with, and adjacent to, the nozzle 107 and the bottle outlet 103.

In alternative embodiments, the outlet 170 may be arranged such that the liquid is dispensed onto an absorbent material, into a vessel, through a direct dispensing tube or onto a heat source, or the likes.

In normal use, the liquid cannot be pushed back into the bottle 200 as the one-way valve and outlet system 103, 105 in the adapter 102 restricts any flow back into the bottle. The liquid from the barrel 109 flows through to the water stream as it is the path of least hydraulic resistance.

In the embodiment being described, a pipe 130 connects the adapter 102 to the nozzle 107 of the barrel 109. The pipe also connects the nozzle 107 to the outlet 170, which is a water stream in the embodiment shown.

In the embodiment being described, the nozzle 107 is located close to both the outlet 103 of the adapter 102 and the dispensing outlet 170; the length of the pipe 130 is therefore relatively short. Advantageously, this may help to minimise or avoid purging requirements to flush unused liquid out of the dosing apparatus 100.

The rate at which the pump piston is driven back to its initial, pre-activation, position (i.e. upwards in the embodiment shown) is controlled by the damping control system 300.

As the dose button 150 is activated, driving the pump piston (downwards), a connected hydraulic piston is similarly driven within a hydraulic charging chamber 108. The hydraulic piston, when driven, moves a quantity of hydraulic fluid from the hydraulic charging chamber 108 into a passageway 114. The passageway is provided by a series of oilways and/or pipes/tubes 114 in the embodiment being described.

A hydraulic filling port 180 is provided to allow the hydraulic fluid to be drained, replaced or topped up, as appropriate.

The damping control system 300 uses and controls the movement of the hydraulic fluid so as to control the return rate of the pump piston, and hence the dosing rate.

The damping control system 300 comprises four functional elements - a damping one-way valve 110, a sprung damping cylinder 106, a flow valve 112 and damping control setting 162.

The one-way valve 110 allows the hydraulic fluid driven from the hydraulic charging chamber 108 to travel through the passageway 114 to the sprung damping cyclinder 106.

The sprung damping cylinder 106 takes in the volume of displaced hydraulic fluid while creating a spring force to complete the return cycle of the dosing pump 104.

The sprung damping cylinder 106 comprises a biasing member, in this case a spring (foam, another compressible elastic material, memory metal or an air bubble, etc. may be used in alternative or additional embodiments). The biasing member moves proportionally with the volume of hydraulic fluid displaced into the sprung damping cylinder 106. As the hydraulic fluid moves the spring, a force in the spring is created which is sufficient to return the hydraulic piston, and thereby the dosing piston, to its initial position, and therefore dispense the liquid via the dispensing outlet 170.

The spring force acts upon the hydraulic fluid, driving it in the return direction. The hydraulic fluid is unable to return through the damping one-way valve 110 and is directed to a return channel including the flow valve 112 to limit the rate at which it can pass.

The setting of the flow valve 112 can be adjusted to restrict or widen the return channel, so reducing or increasing the rate at which hydraulic fluid can pass therethrough, respectively. The fluid passing through the return channel enters the hydraulic charging chamber 108 and so moves the hydraulic piston back to its initial position at a rate corresponding to the flow rate through the flow valve 112.

In the embodiment being described, the flow valve 112 can be configured from a level of no restriction, and so near-immediate dispensing of the full dose, to a restriction slowing the dosing rate to extend over a duration desired for the application.

In the case of aromatherapy oils, for example, only a small amount of oil is needed for the desired effect, but the dispensing of this small amount is ideally performed over a relatively long time period (e.g. the several minutes taken to have a shower) rather than immediately.

The skilled person will appreciate that aromatherapy dosing will depend on the quality of the oil used and the user preference as to the strength of the scent. This user-set duration may range from 1 second to 30 seconds, to 1, 2, 4, 10, or 15 minutes, for example.

The skilled person will appreciate that the desired duration, and also the available settings, may vary between different embodiments and uses - for example, a dispensing time of approximately 3 minutes may be selected for arometherapy oil release during a shower . The skilled person will appreciate that the control may offer two or more discrete flow rate options or a continuous range.

Desired duration is also likely to change depending on the chemistry of the liquid to be dispensed. For example, bleach in a toilet should be dispensed for a certain duration and in the correct volume to be at the correct concentration to be effective. The dosing duration in this application may be pre-set based on the relationship between the quantity of water used during a flushing activation and the appropriate chemical concentration required to be effective in its disinfection/cleaning task. An equivalent approach may apply to other alternative chemical dosing applications.

The damping control setting 160, 162 allows the delivery time of the dosing apparatus to be configured.

In the embodiments being described, the dispensing rate is controlled by the piston movement, not by the flow rate of the water of the water stream into which the liquid is to be dispensed. The same quantity of liquid is dispensed over the controlled time period, although the additive liquid to water ratio would change depending on flow rate of the water.

The damping control setting 160, 162 comprises a control dial 160 directly or indirectly connected to the flow valve 112. In the embodiment being described, movement of the control dial 160 causes movement of a toothed wheel 162 which interlocks with a cog of the flow valve 112 so as to tighten or loosen the valve 112. The skilled person will appreciate that many alternaive or additional control means may be used, including use of a graphical user interface and electronically controlled flow valve 112.

In the embodiment being described, the control dial 160 is arranged to protrude through a housing 400 of the apparatus 100. The damping control system 300 is calibrated and the housing 400 is marked or labelled to indicate a dosing duration corresponding to each dial position.

In the embodiment being described, the flow valve 112 is an adjustable needle valve.

A user of the apparatus 100 can adjust the damping control setting to a preferred or appropriate setting (e.g. corresponding to a duration of time) before the dose button 150 is driven.

In alternative embodiments, no flow valve 112 and damping control setting 160, 162 may be provided. Instead, the return channel may comprise a narrow channel of a fixed size (e.g. simply a hole, or a non-adjustable needle valve) so as to limit return flow of the hydraulic fluid. The rate of return of the piston is therefore constant. In such cases, the duration of the dosing is fixed for a given volume of hydraulic fluid displaced, and therefore for a given volume of liquid dispensed. A constant dosing rate (as compared to a constant duration) may therefore be provided for various different volumes of liquid, in embodiments in which the set volume can be adjusted.

In the embodiment being described, once the dose button 150 is driven, the damping control setting selected corresponds to the duration of time over which the dosing pump 104 will deliver the dose into the water stream.

In the embodiment being described, the dosing apparatus 100 is provided as a standalone box to be fittted to a standard shower or tap outlet. For a shower, the box would be fitted between a shower control box and a shower head. In alternative embodiments, the dosing apparatus 100 may be integrated into a shower control box. In either case, it may be used with hand-held showers and with wall- or ceilingmounted showers (e.g. overhead showers).

The skilled person will appreciate that dose volume and time of delivery of each dose can be scaled for different applications.

The duration of delivery of each dose is also scalable from instantaneous delivery to delivery over long periods of time.

The system is designed to dose liquids, including gels and creams in this definition. Different viscosity materials may require different engineering details, e.g. different widths of the return channel, increased air pressure or a piston to remove bottle contents, etc., but can use the same principles.

Advantageously, very little purging of the apparatus 100 may be required, as the dosing pump 104 can be located at a minimal distance from the dispensing outlet 170 (in the embodiment shown, the water stream). Any liquid is therefore delivered directly out of the dispensing outlet 170, in this case into the water stream.

In the embodiment being described, once the essential oil (or other liquid) is dosed, the nature of the water stream flushes the area reducing the need to purge between different essential oils (or other liquids).

In alternative or additional embodiments, the dosing piston may be replaced by a different moveable member, and the dosing piston barrel may be replaced with a different dosing chamber. For example, the dosing chamber may be expansible (e.g. a balloon or the likes) and the moveable member may be a member that forces expansion of the dosing chamber when activated, so reducing pressure within the chamber and drawing the additive out of the container 200.

The skilled person will appreciate that, with the disclosure of the underlying damping control mechanism and the examples given herein, the skilled person could make various alternative dosing mechanisms using his or her general knowledge, falling within the scope of the invention which is defined by the appended claims.

## Claims

1. A liquid dosing apparatus (100) for dispensing a liquid from a container (200) into a liquid stream of a shower, toilet or tap, the apparatus (100) comprising:
an adapter (102) arranged to detachably receive the container (200);
a dosing mechanism (104) comprising a dosing chamber (109) and a moveable member (104), and arranged to draw a set volume of the liquid into the dosing chamber (109) on activation, activation comprising moving the moveable member (104) in a first direction;
a damping control system (300) arranged to control a dispensing rate of the set volume of the liquid by controlling return speed of the moveable member (104); and
a dispensing outlet (103) arranged to dispense the liquid into the water stream at the controlled dispensing rate.

2. The dosing apparatus (100) of Claim 1, wherein:
the adapter (102) comprises a first one-way valve (103) arranged to allow liquid flow out of the container (200) and prevent liquid flow into the container; and
the damping control system (300) comprises:
a hydraulic piston within a charging chamber (108) containing hydraulic fluid, wherein the hydraulic piston is arranged to be driven so as to move a quantity of hydraulic fluid from the hydraulic charging chamber (108) and through a second one-way valve (110) and to a sprung damping chamber (106) when the dosing mechanism (104) is activated; and
a return channel (112) located across the second one-way valve (110), wherein
the return channel (112) is arranged to limit the rate at which the hydraulic fluid can pass therethrough; and
wherein the sprung damping chamber (106) is arranged to absorb the volume of the displaced hydraulic fluid while creating a spring force to complete a return cycle of the dosing mechanism (104), the spring force driving the hydraulic fluid in the return direction via the return channel (112).

3. The dosing apparatus of claim 1 or claim 2 wherein the damping control system (300) comprises a return channel (112), and the damping control system (300) is arranged to allow and control adjustment of the dispensing rate, and optionally wherein the damping control system (300) is arranged such that the dispensing rate can be varied between no restriction of the return channel (112), and hence near-instant dispensing of the set volume on activation, and sufficient restriction to spread dispensing over a set time period.

4. The dosing apparatus (100) of claim 3 as dependent on claim 2 wherein the damping control system (300) comprises a flow valve (112) arranged to provide at least a part of the return channel (112) across the second one-way valve (110), wherein the flow valve (112) is arranged to adjustably limit the rate at which the hydraulic fluid can pass therethrough.

5. The dosing apparatus (100) of claim 4 further comprising a damping control mechanism (160, 162) arranged to allow adjustment of the flow valve (112), and wherein optionally the damping control mechanism (160, 162) comprises a control dial or slider (160) arranged to indicate dispensing time for a given setting.

6. The dosing apparatus (100) of claim 2 or of any preceding claim as dependent on claim 2, wherein the adapter (102) is part of a cartridge (10) arranged to engagingly receive the container (200), and wherein optionally the cartridge (10) is arranged to be removeably attached to both the container (200) and the dosing mechanism (104).

7. The dosing apparatus (100) of claim 6 wherein at least one of:
(i) the adapter (102) is arranged to serve as a lid for the container (200), retaining any remaining liquid within the container (200) when the cartridge (10) is removed from the rest of the dosing apparatus (100); and/or
(ii) the cartridge (10) is arranged to be a press-fit with a housing (400) of the dosing mechanism (104) for ease of attachment and removal.

8. The dosing apparatus (100) of claim 2 or of any preceding claim as dependent on claim 2, wherein at least one of the following applies:
(i) the adapter (102) comprises an air-replenishment valve (105) to allow air into the container (200) in place of the liquid extracted;
(ii) the adapter (102) is located above the dosing mechanism (104) such that the liquid travels downwards from the container (200) into the dosing chamber (109) when activated; and/or
(iii) the dispensing outlet (103) is connected to a water stream, optionally a shower, toilet or tap water stream.

9. The dosing apparatus (100) of any preceding claim wherein the dosing mechanism (104) is arranged to be activated using a dose activator (150), such as a dose button (150).

10. The dosing apparatus (100) of claim 9, wherein the dose activator (150) comprises at least one of:
(i) a slider which is arranged to be moved downwards to move the moveable member (104) downwards, and which is pulled back up by the dosing apparatus (104) as the moveable member is raised during the return cycle, and wherein optionally slider position is arranged to indicate how much of the set volume has been dispensed; and
(ii) a push-button (150).

11. The dosing apparatus (100) of any preceding claim wherein at least one of the following applies:
(i) the liquid is an aromtherapy oil, liquid soap, fragrance, or shower gel;
(ii) the dispensing outlet (103) is adjacent to the exit point for liquid from the dosing chamber (109);
(iii) the set volume can be adjusted by a user;
(iv) the container (200) is an aromatherapy oil bottle; and/or
(v) the container (200) has an opening through which the liquid is arranged to pass, and, in use, the container (200) is postioned such that the opening is the lowest part of the container.

12. The dosing apparatus (100) of claim 2 or of any preceding claim as dependent on claim 2, wherein the spring force of the sprung damping chamber (106) is provided by a biasing member comprising at least one of:
a spring; compressible foam; memory metal; an air bubble; and an elastic compressible material such as rubber.

13. The dosing apparatus (100) of any preceding claim wherein the dosing mechanism (104) is a dosing pump comprising a dosing piston with a barrel, the barrel forming the dosing chamber (109) and the piston forming the moveable member (104), and arranged to draw a set volume of the liquid into the barrel (109) on activation, activation comprising moving the dosing piston (104) in a first direction;
and wherein the damping control system (300) is arranged to control a dispensing rate of the set volume of the liquid by controlling return speed of the dosing piston (104).

14. The dosing apparatus (100) of claim 13, wherein the first direction is downwards, such that the dosing piston (104) is drawn downwards to draw the liquid into the dosing chamber (109), and is moved upwards by the return of the hydraulic fluid.

15. A shower control box (400) or tap comprising a dosing apparatus (100) according to any preceding claim.

## Patentansprüche

1. Flüssigkeitsdosiereinrichtung (100) zum Abgeben einer Flüssigkeit aus einem Behälter (200) in einen Flüssigkeitsstrom einer Dusche, Toilette oder Armatur, wobei die Einrichtung (100) umfasst:
einen Adapter (102), der dazu eingerichtet ist, den Behälter (200) abnehmbar aufzunehmen;
einen Dosiermechanismus (104), der eine Dosierkammer (109) und ein bewegliches Element (104) umfasst und dazu eingerichtet ist, bei Aktivierung ein eingestelltes Volumen der Flüssigkeit in die Dosierkammer (109) zu ziehen, wobei die Aktivierung das Bewegen des beweglichen Elements (104) in eine erste Richtung umfasst;
ein Dämpfungsregelsystem (300), das dazu eingerichtet ist, eine Abgaberate des eingestellten Volumens der Flüssigkeit durch Regeln der Rücklaufgeschwindigkeit des beweglichen Elements (104) zu regeln; und
einen Abgabeauslass (103), der dazu eingerichtet ist, die Flüssigkeit mit der geregelten Abgaberate in den Wasserstrom abzugeben.

2. Dosiereinrichtung (100) nach Anspruch 1, wobei:
der Adapter (102) ein erstes Einwegventil (103) umfasst, das dazu eingerichtet ist, eine Flüssigkeitsströmung aus dem Behälter (200) zu erlauben und eine Flüssigkeitsströmung in den Behälter zu verhindern; und
das Dämpfungsregelsystem (300) umfasst:
einen Hydraulikkolben innerhalb einer Hydraulikfluid enthaltenden Ladekammer (108), wobei der Hydraulikkolben dazu eingerichtet ist, so angetrieben zu werden, dass er eine Menge an Hydraulikfluid aus der Hydraulikladekammer (108) und durch ein zweites Einwegventil (110) und zu einer gefederten Dämpfungskammer (106) bewegt, wenn der Dosiermechanismus (104) aktiviert wird; und
einen Rücklaufkanal (112), der sich über dem zweiten Einwegventil (110) befindet, wobei der Rücklaufkanal (112) dazu eingerichtet ist, die Rate zu begrenzen, mit der das Hydraulikfluid durch ihn hindurchtreten kann; und
wobei die gefederte Dämpfungskammer (106) dazu eingerichtet ist, das Volumen des verdrängten Hydraulikfluids zu absorbieren, während sie eine Federkraft erzeugt, um einen Rücklaufzyklus des Dosiermechanismus (104) zu vollenden, wobei die Federkraft das Hydraulikfluid über den Rücklaufkanal (112) in die Rücklaufrichtung treibt.

3. Dosiereinrichtung nach Anspruch 1 oder Anspruch 2, wobei das Dämpfungsregelsystem (300) einen Rücklaufkanal (112) umfasst und das Dämpfungsregelsystem (300) dazu eingerichtet ist, eine Anpassung der Abgaberate zu erlauben und zu regeln, und wobei das Dämpfungsregelsystem (300) optional eingerichtet ist, sodass die Abgaberate zwischen keiner Begrenzung des Rücklaufkanals (112) und somit einer nahezu sofortigen Abgabe des eingestellten Volumens bei Aktivierung und einer ausreichenden Begrenzung zur Verteilung der Abgabe über einen eingestellten Zeitraum variiert werden kann.

4. Dosiereinrichtung (100) nach Anspruch 3 in Abhängigkeit von Anspruch 2, wobei das Dämpfungsregelsystem (300) ein Strömungsventil (112) umfasst, das dazu eingerichtet ist, mindestens einen Teil des Rücklaufkanals (112) über das zweite Einwegventil (110) bereitzustellen, wobei das Strömungsventil (112) dazu eingerichtet ist, die Rate, mit der das Hydraulikfluid durch dieses hindurchtreten kann, einstellbar zu begrenzen.

5. Dosiereinrichtung (100) nach Anspruch 4, die weiter einen Dämpfungsregelmechanismus (160, 162) umfasst, der dazu eingerichtet ist, eine Anpassung des Strömungsventils (112) zu erlauben, und wobei der Dämpfungsregelmechanismus (160, 162) optional einen Drehregler oder einen Schieber (160) umfasst, der dazu eingerichtet ist, die Abgabezeit für eine gegebene Einstellung anzuzeigen.

6. Dosiereinrichtung (100) nach Anspruch 2 oder nach einem vorstehenden, von Anspruch 2 abhängigen Anspruch, wobei der Adapter (102) Teil einer Kartusche (10) ist, die dazu eingerichtet ist, den Behälter (200) eingreifend aufzunehmen, und wobei die Kartusche (10) optional dazu eingerichtet ist, sowohl an dem Behälter (200) als auch an dem Dosiermechanismus (104) abnehmbar befestigt zu werden.

7. Dosiereinrichtung (100) nach Anspruch 6, wobei mindestens eine(r) von:
(i) dem Adapter (102) dazu eingerichtet ist, als Deckel für den Behälter (200) zu dienen, der jegliche verbleibende Flüssigkeit im Behälter (200) zurückhält, wenn die Kartusche (10) vom Rest der Dosiereinrichtung (100) abgenommen wird; und/oder
(ii) der Kartusche (10) dazu eingerichtet ist, einen Presssitz mit einem Gehäuse (400) des Dosiermechanismus (104) zu bilden, um das Befestigen und Abnehmen zu erleichtern.

8. Dosiereinrichtung (100) nach Anspruch 2 oder nach einem vorstehenden Anspruch in Abhängigkeit von Anspruch 2, wobei mindestens eines von Folgendem gilt:
(i) der Adapter (102) umfasst ein Luftauffüllungsventil (105), um Luft anstelle der entnommenen Flüssigkeit in den Behälter (200) zu erlauben;
(ii) der Adapter (102) befindet sich über dem Dosiermechanismus (104), sodass die Flüssigkeit bei Aktivierung aus dem Behälter (200) nach unten in die Dosierkammer (109) wandert; und/oder
(iii) der Abgabeauslass (103) ist mit einem Wasserstrom, optional einem Dusch-, Toiletten- oder Leitungswasserstrom, verbunden.

9. Dosiereinrichtung (100) nach einem vorstehenden Anspruch, wobei der Dosiermechanismus (104) dazu eingerichtet ist, unter Verwendung eines Dosisaktivierers (150), wie etwa einem Dosisknopf (150), aktiviert zu werden.

10. Dosiereinrichtung (100) nach Anspruch 9, wobei der Dosisaktivierer (150) mindestens eines umfasst von:
(i) einem Schieber, der dazu eingerichtet ist, nach unten bewegt zu werden, um das bewegliche Element (104) nach unten zu bewegen, und der von der Dosiereinrichtung (104) wieder nach oben gezogen wird, wenn das bewegliche Element während des Rücklaufzyklus angehoben wird, und wobei die Position des Schiebers optional dazu eingerichtet ist, anzuzeigen, wie viel von dem eingestellten Volumen abgegeben worden ist; und
(ii) einem Druckknopf (150).

11. Dosiereinrichtung (100) nach einem vorstehenden Anspruch, wobei mindestens eines von Folgendem gilt:
(i) die Flüssigkeit ist ein Aromatherapie-Öl, eine Flüssigseife, ein Duftstoff oder ein Duschgel;
(ii) der Abgabeauslass (103) grenzt an die Austrittsstelle für Flüssigkeit aus der Dosierkammer (109) an;
(iii) das eingestellte Volumen kann von einem Benutzer angepasst werden;
(iv) der Behälter (200) ist eine Aromatherapie-Ölflasche; und/oder
(v) der Behälter (200) weist eine Öffnung auf, durch die die Flüssigkeit hindurchzutreten eingerichtet ist, und bei der Verwendung ist der Behälter (200) so positioniert, dass die Öffnung der niedrigste Teil des Behälters ist.

12. Dosiereinrichtung (100) nach Anspruch 2 oder nach einem vorstehenden Anspruch in Abhängigkeit von Anspruch 2, wobei die Federkraft der gefederten Dämpfungskammer (106) durch ein Vorspannelement bereitgestellt wird, das mindestens eines umfasst von:
einer Feder; komprimierbarem Schaumstoff; Memory-Metall; einer Luftblase; und einem elastisch komprimierbaren Material wie Gummi.

13. Dosiereinrichtung (100) nach einem vorstehenden Anspruch, wobei der Dosiermechanismus (104) eine Dosierpumpe ist, die einen Dosierkolben mit einer Trommel umfasst, wobei die Trommel die Dosierkammer (109) bildet und der Kolben das bewegliche Element (104) bildet, und die dazu eingerichtet ist, bei Aktivierung ein eingestelltes Volumen der Flüssigkeit in die Trommel (109) zu ziehen, wobei die Aktivierung die Bewegung des Dosierkolbens (104) in eine erste Richtung umfasst;
und wobei das Dämpfungsregelsystem (300) dazu eingerichtet ist, eine Abgaberate des eingestellten Volumens der Flüssigkeit durch Regeln der Rücklaufgeschwindigkeit des Dosierkolbens (104) zu regeln.

14. Dosiereinrichtung (100) nach Anspruch 13, wobei die erste Richtung nach unten verläuft, sodass der Dosierkolben (104) nach unten gezogen wird, um die Flüssigkeit in die Dosierkammer (109) zu ziehen, und durch den Rücklauf des Hydraulikfluids nach oben bewegt wird.

15. Duschregelbox (400) oder Armatur, die eine Dosiereinrichtung (100) nach einem vorstehenden Anspruch umfasst.

## Revendications

1. Appareil de dosage de liquide (100) pour distribuer un liquide depuis un récipient (200) dans un courant de liquide d'une douche, de toilettes ou d'un robinet, l'appareil (100) comprenant :
un adaptateur (102) agencé pour recevoir de manière amovible le récipient (200) ;
un mécanisme de dosage (104) comprenant une chambre de dosage (109) et un élément mobile (104) et agencé pour aspirer un volume défini du liquide dans la chambre de dosage (109) lors de l'activation, l'activation comprenant le déplacement de l'élément mobile (104) dans une première direction ;
un système de commande d'amortissement (300) agencé pour commander un débit de distribution du volume défini du liquide en commandant la vitesse de retour de l'élément mobile (104) ; et
une sortie de distribution (103) agencée pour distribuer le liquide dans le courant d'eau au débit de distribution commandé.

2. Appareil de dosage (100) selon la revendication 1, dans lequel :
l'adaptateur (102) comprend une première vanne unidirectionnelle (103) agencée pour laisser un écoulement de liquide sortir du récipient (200) et empêcher l'écoulement de liquide d'entrer dans le récipient ; et
le système de commande d'amortissement (300) comprend :
un piston hydraulique à l'intérieur d'une chambre de charge (108) contenant un fluide hydraulique, dans lequel le piston hydraulique est agencé pour être entraîné de manière à déplacer une quantité de fluide hydraulique de la chambre de charge hydraulique (108), et à travers une seconde vanne unidirectionnelle (110), et jusqu'à une chambre d'amortissement à ressort (106) lorsque le mécanisme de dosage (104) est activé ; et
un canal de retour (112) situé à travers la seconde vanne unidirectionnelle (110), dans lequel le canal de retour (112) est agencé pour limiter le débit auquel le fluide hydraulique peut passer à travers celui-ci ; et
dans lequel la chambre d'amortissement à ressort (106) est agencée pour absorber le volume du fluide hydraulique déplacé tout en créant une force de ressort pour terminer un cycle de retour du mécanisme de dosage (104), la force de ressort entraînant le fluide hydraulique dans la direction de retour par le canal de retour (112).

3. Appareil de dosage selon la revendication 1 ou la revendication 2 dans lequel le système de commande d'amortissement (300) comprend un canal de retour (112), et le système de commande d'amortissement (300) est agencé pour permettre et commander le réglage du débit de distribution, et éventuellement dans lequel le système de commande d'amortissement (300) est agencé de telle sorte que le débit de distribution puisse être modifié entre aucune restriction du canal de retour (112), et donc une distribution quasi instantanée du volume défini lors de l'activation, et une restriction suffisante pour étaler la distribution sur une période de temps définie.

4. Appareil de dosage (100) selon la revendication 3 lorsqu'elle dépend de la revendication 2, dans lequel le système de commande d'amortissement (300) comprend une vanne de débit (112) agencée pour fournir au moins une partie du canal de retour (112) à travers la seconde vanne unidirectionnelle (110), dans lequel la vanne de débit (112) est agencée pour limiter de manière réglable le débit auquel le fluide hydraulique peut passer à travers celle-ci.

5. Appareil de dosage (100) selon la revendication 4, comprenant en outre un mécanisme de commande d'amortissement (160, 162) agencé pour permettre le réglage de la vanne de débit (112) et dans lequel, facultativement, le mécanisme de commande d'amortissement (160, 162) comprend un cadran de commande, ou un curseur (160), agencé pour indiquer le temps de distribution pour un réglage donné.

6. Appareil de dosage (100) selon la revendication 2 ou selon une quelconque revendication précédente dépendant de la revendication 2, dans lequel l'adaptateur (102) fait partie d'une cartouche (10) agencée pour recevoir par mise en prise le récipient (200) et dans lequel, facultativement, la cartouche (10) est agencée pour être fixée de manière amovible à la fois au récipient (200) et au mécanisme de dosage (104).

7. Appareil de dosage (100) selon la revendication 6, dans lequel au moins un de :
(i) l'adaptateur (102) est agencé pour servir de couvercle au récipient (200), retenant n'importe quel liquide restant à l'intérieur du récipient (200) lorsque la cartouche (10) est retirée du reste de l'appareil de dosage (100) ; et/ou
(ii) la cartouche (10) est agencée pour être ajustée par pression sur un boîtier (400) du mécanisme de dosage (104) pour faciliter la fixation et le retrait.

8. Appareil de dosage (100) selon la revendication 2 ou selon une quelconque revendication précédente dépendant de la revendication 2, dans lequel au moins l'une des conditions suivantes s'applique :
(i) l'adaptateur (102) comprend une vanne de réapprovisionnement en air (105) pour permettre à l'air d'entrer dans le récipient (200) à la place du liquide extrait ;
(ii) l'adaptateur (102) est situé au-dessus du mécanisme de dosage (104) de telle sorte que le liquide se déplace vers le bas depuis le récipient (200) dans la chambre de dosage (109) lorsqu'il est activé ; et/ou
(iii) la sortie de distribution (103) est reliée à un courant d'eau, facultativement un courant d'eau de douche, de toilettes ou de robinet.

9. Appareil de dosage (100) selon une quelconque revendication précédente, dans lequel le mécanisme de dosage (104) est agencé pour être activé en utilisant un activateur de dose (150), tel qu'un bouton de dose (150).

10. Appareil de dosage (100) selon la revendication 9, dans lequel l'activateur de dose (150) comprend au moins un parmi :
(i) un curseur qui est agencé pour être déplacé vers le bas pour déplacer l'élément mobile (104) vers le bas, et qui est remonté par l'appareil de dosage (104) au fur et à mesure que l'élément mobile est relevé pendant le cycle de retour, et dans lequel, facultativement, une position de curseur est agencée pour indiquer quelle quantité du volume défini a été distribuée ; et
(ii) un bouton-poussoir (150).

11. Appareil de dosage (100) selon une quelconque revendication précédente, dans lequel au moins l'une des conditions suivantes s'applique :
(i) le liquide est une huile d'aromathérapie, un savon liquide, un parfum ou un gel douche;
(ii) la sortie de distribution (103) est adjacente au point de sortie du liquide de la chambre de dosage (109) ;
(iii) le volume défini peut être ajusté par un utilisateur ;
(iv) le récipient (200) est une bouteille d'huile d'aromathérapie ; et/ou
(v) le récipient (200) présente une ouverture à travers laquelle le liquide est agencé pour passer, et, en utilisation, le récipient (200) est positionné de telle sorte que l'ouverture soit la partie la plus basse du récipient.

12. Appareil de dosage (100) selon la revendication 2 ou selon une quelconque revendication précédente dépendant de la revendication 2, dans lequel la force de ressort de la chambre d'amortissement à ressort (106) est fournie par un élément de sollicitation comprenant au moins un parmi :
un ressort ; une mousse compressible ; un métal à mémoire de forme ; une bulle d'air ; et un matériau compressible élastique tel que le caoutchouc.

13. Appareil de dosage (100) selon une quelconque revendication précédente, dans lequel le mécanisme de dosage (104) est une pompe doseuse comprenant un piston doseur avec un cylindre, le cylindre formant la chambre de dosage (109) et le piston formant l'élément mobile (104), et agencé pour aspirer un volume défini du liquide dans le cylindre (109) lors de l'activation, l'activation comprenant le déplacement du piston doseur (104) dans une première direction ;
et dans lequel le système de commande d'amortissement (300) est agencé pour commander un débit de distribution du volume défini du liquide en commandant la vitesse de retour du piston doseur (104).

14. Appareil de dosage (100) selon la revendication 13, dans lequel la première direction est vers le bas de telle sorte que le piston doseur (104) soit tiré vers le bas pour aspirer le liquide dans la chambre de dosage (109), et qu'il soit déplacé vers le haut par le retour du fluide hydraulique.

15. Module de commande de douche (400) ou robinet comprenant un appareil de dosage (100) selon une quelconque revendication précédente.
